# EUROPEAN PATENT APPLICATION

(11) **EP 1 870 530 A2**
(43) Date of publication of application: **26.12.2007**
(21) Application number: 07252517.3
(22) Date of filing: 21.06.2007
(51) Int. Cl.: E04C 2/22

(54) **Steam-proof wallboards for damp rooms**

(30) Priority: 22.06.2006 NO 20062912
(71) Applicant: Litex AS, 3204 Sandefjord (NO)
(72) Inventor: Rykkelid, Per Ole, 3744 Skien (NO)
(74) Representative: Briddes, Sam

(57) **Abstract**

The present invention relates to wallboards particularly for damp rooms, which boards have a steam-resistant layer which prevents penetration of steam. The boards are particularly suitable for covering with tiles and are prefabricated in such a manner that they are easy to set up and to adapt to existing damp room structures according to general existing standards.

## Description

The present invention relates to wallboards particularly for damp rooms, which boards have a steam-resistant layer that prevents penetration and permeation of steam. The boards are particularly suitable for covering with tiles and are prefabricated in such a manner that they are easy to put up and to adapt to existing damp room structures according to general existing standards.
The use of gypsum boards in damp rooms is previously known. These have to be coated with a damp-repellent membrane in order to keep the dampness from the damp room out of the board. Gypsum boards of this kind are attached to a stanchion or other support by screw connections and then coated or spread with a damp-repellent membrane. At joints etc. a fibre strip is often employed which in turn is spread with membrane to prevent dampness from penetrating the board. In the same way, at the transition to the floor or at corners, a fibre strip is employed which is spread with membrane to prevent dampness penetrating the boards.
There is a requirement for the boards used in damp rooms to have a rigidity that permits tiles or the like to be affixed to the outside of the boards against the damp room. This means that the boards must be able to withstand relatively great pressure and weight stresses. The boards must be rigid and should not react to temperature changes. In other words the boards should be stable throughout their lifetime. Furthermore, steam or dampness should not penetrate the board or pass further into the structure.
In order to be suitable for use as a wallboard in a damp room, moreover, a board must be approved according to national approval procedures for building and damp rooms.
Later developments have produced a new type of board which is well-suited for use in damp rooms. These boards are based on a board made of extruded polystyrene (XPS) or expanded polystyrene (EPS), which are well-suited to such applications due to their low net weight and stable shape under the conditions encountered in a damp room. Furthermore, the boards are coated with a fibre-reinforced cloth and epoxy, preferably water-based epoxy which acts as a membrane. The finished board is therefore a membrane board and can be placed directly on a stanchion. Alternatively, the board may, for example, be glued directly to an existing brick wall. Joints between the boards are covered by a fibre strip and spread with a water-repellent and watertight membrane. Such boards, moreover, are insulating since they contain closed cell structures which retain the temperature. An example of such boards is the Litex® board produced by Litex as in Sandefjord, Norway.

In recent times, however, the requirements regarding wallboards have moved not only in the direction of a watertight and water-repellent membrane but also a steam-proof membrane. A steam barrier is often used in a wall construction in damp rooms, but in this case as an impermeable plastic sheet between the wall construction and the wallboard. According to the new requirements for wallboards in damp rooms, it is also necessary to have a steam-proof surface on the wallboard in addition to being watertight and satisfying the rest of the requirements regarding compressive strength etc. A steam-proof surface of this kind is obtained by employing a so-called steam block or steam barrier which prevents penetration or permeation of steam. The steam barrier is characterised according to how much steam pressure it can resist, which is also called steam resistance or steam resistivity.

The object of the steam barrier is to prevent damp air moving out from the damp room into the rest of the structure. There are often substantial temperature differences between the outside of the damp room and the surrounding environment since the damp room contains moist warm air and the surrounding rooms or the outside of the house are cooler. In many cases where a damp room is located against the outer wall, the temperature difference may be substantial, possibly reaching 30-50 degrees C. Through this temperature difference the steam (moist warm air) will be cooled down and lose its capacity to retain moisture. The moisture released by the steam will then remain in the structure, possibly leading to undesirable moisture damage. The steam-resistance requirement for a damp room construction is established by the relevant authorities and for a standard building in Norway, the steam-resistance requirement will typically be 50×109m2sPa/kg or 10m equivalent air layer thickness, where a damp room has a cold outer wall or an uninsulated cellar. The requirement will vary from country to country.

The object of the present invention, therefore, is to provide a wallboard which is prefabricated in order to comply with the existing requirements for wallboards in damp rooms and can thereby be placed directly on stanchions or another support, requiring no treatment other than sealing of joints and penetrations by pipes etc.
The wallboard should have a watertight surface and in addition should be steam-proof according to existing building regulations.

A wallboard is thereby provided for use on walls, floors and ceilings in damp rooms, which board is particularly suitable for tiling and plastering, which board consists of an extruded or expanded polystyrene board with a covering layer on at least one side consisting of fibre reinforcement and a layer of a strengthening material. The wallboard is characterised in that in addition it is coated with a steam-proof layer which forms a steam barrier consisting of a primer where the primer is applied over the entire length of the board between the polystyrene board and the external strengthening material.

In a further embodiment a wallboard is provided for use on walls, floors and ceilings in damp rooms, which board is particularly suitable for tiling and plastering, which board consists of an extruded or expanded polystyrene board with a covering layer on at least one side consisting of fibre reinforcement and a layer of a strengthening material. The wallboard is characterised in that in addition it is coated with a steam-proof layer which forms a steam barrier consisting of an aluminium foil which covers the entire length of the board between the extruded polystyrene board and the external strengthening material or on the outside of the strengthening material. In different embodiments the aluminium foil may be glued directly to the board before applying the strengthening material or on the outside of the strengthening material.

In yet another embodiment a wallboard is provided for use on walls, floors and ceilings in damp rooms, which board is particularly suitable for tiling and plastering, which board consists of an extruded or expanded polystyrene board with a covering layer on at least one side consisting of fibre reinforcement and a layer of a strengthening material. The wallboard is characterised in that in addition it is coated with a steam-proof layer which forms a steam barrier consisting of a primer where the primer is applied over the entire length of the board on the outside of the external strengthening material.

In a further embodiment a wallboard is provided for use on walls, floors and ceilings in damp rooms, which board is particularly suitable for tiling and plastering, which board consists of an extruded or expanded polystyrene board with a covering layer on at least one side consisting of fibre reinforcement and a layer of a strengthening material. The wallboard is characterised in that it is coated with a steam-proof layer which forms a steam barrier consisting of a primer where the primer is applied over the entire length of the board over the extruded polystyrene board, the external strengthening material and the primer being mixed and applied in one operation.

For all the embodiments the strengthening material may be a hardening epoxy mixture or a cement-based mixture. This may also be a water-based epoxy. Furthermore, the fibre reinforcement may be a fibre cloth or the fibre reinforcement may consist of fibres included in the strengthening material. The common feature of all of these is that the fibre reinforcement may be glass fibre. Fibres may also be included in the primer material that is to form the steam-proof layer.
The primer employed should have sealing properties, forming a steam-proof or steam-limiting layer which resists an appropriate steam pressure preferably according to the specifications stated or recommended in a national approval procedure or standard. A number of different primers may be employed, an example of which is butadiene-styrene copolymer mixed with water, for example with 0-40% water. This mixture is water-soluble. A further example is a polyvinylidene chloride which is also water-soluble. This mixture also has preferably inactive filling materials. Other examples which may be mentioned are: acrylic resin, vinyl chloride, ethyl acetate, vinyl acetate, acrylic styrene, bitumen, polyethylene coating.

The invention will now be described schematically with reference to the attached figures, in which:
Figure 1 describes a previously known construction of a bathroom wall.
Figure 2 illustrates the construction of an embodiment of a wallboard according to the present invention.
Figure 3 illustrates the construction of a further embodiment of a wallboard according to the present invention.

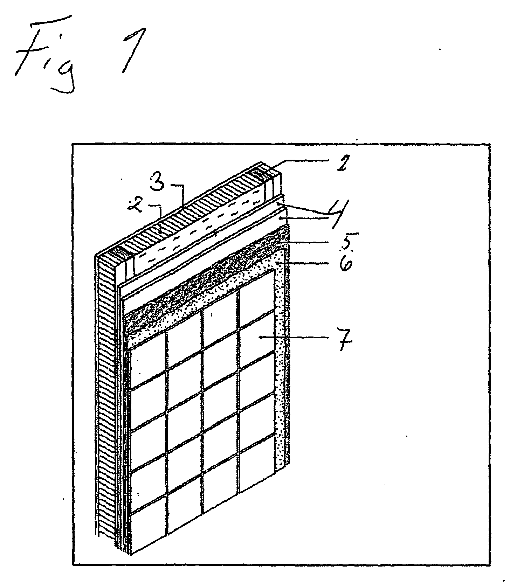

As illustrated in figure 1, a standard bathroom wall is often composed of stanchions 1, usually made of woodwork with insulation 2 between and a coating 3 on one side of the wall. On the bathroom side of the wall, furthermore, there are one to two layers of gypsum boards 4 of a suitable thickness for supporting the load of ceramic tiles 7 to be affixed to the wall. Moreover, a watertight membrane 5 is applied to the gypsum boards 4 before the tiles 7 are affixed with glue 6.

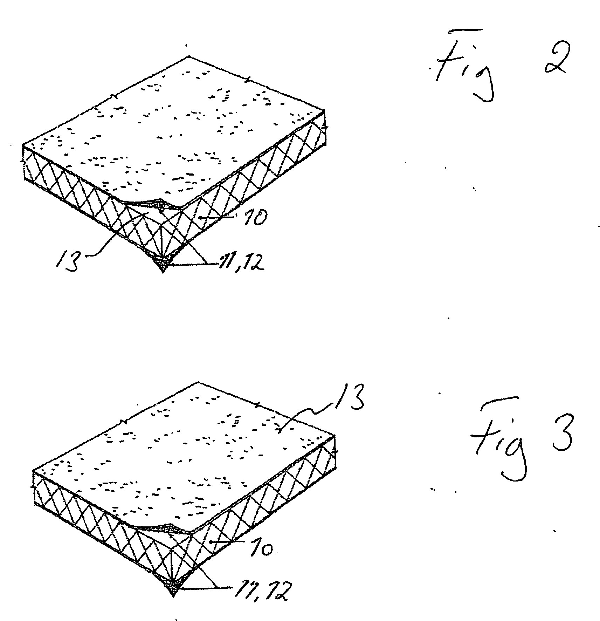

An embodiment of the invention is illustrated in figure 2 where a core 10 of extruded or expanded polystyrene is covered on each side by a fibre cloth 11 and a strengthening layer 12 which also binds the fibre cloth 11 to the core 10. This figure further illustrates how a primer 13 which provides suitable steam resistance is applied between the core 10 and the fibre-reinforced strengthening layer 11, 12.

A further embodiment of the invention is illustrated in figure 3 where a core 10 of extruded or expanded polystyrene is covered on each side by a fibre cloth 11 and a strengthening layer 12 which also binds the fibre cloth 11 to the core 10. This figure further illustrates how a primer 13 which provides suitable steam resistance is applied on the outside of the fibre-reinforced strengthening layer 11, 12. As indicated above, the primer forming the steam-proof layer may also be mixed with the strengthening layer.

## Claims

1. A wallboard for use on walls, floors and ceilings in damp rooms, which board is particularly suitable for tiling and plastering, which board consists of an extruded or expanded polystyrene board with a covering layer on at least one side consisting of fibre reinforcement and a layer of a strengthening material,
**characterised in that** in addition the wallboard is coated with a steam-proof layer which forms a steam barrier consisting of a primer where the primer is applied over the entire length of the board between the polystyrene board and the external strengthening material.

2. A wallboard according to claim 1,
**characterised in that** the strengthening material is a hardening epoxy mixture.

3. A wallboard according to claim 1,
**characterised in that** the strengthening material is a cement-based mixture.

4. A wallboard according to any of the claims 1-3,
**characterised in that** the fibre reinforcement is a fibre cloth.

5. A wallboard according to any of the claims 1-3,
**characterised in that** the fibre reinforcement is fibres included in the strengthening material.

6. A wallboard according to claims 1-5,
**characterised in that** the fibre reinforcement is glass fibre.

7. A wallboard for use on walls, floors and ceilings in damp rooms, which board is particularly suitable for tiling and plastering, which board consists of an extruded or expanded polystyrene board with a covering layer on at least one side consisting of fibre reinforcement and a layer of a strengthening material,
**characterised in that** in addition the wallboard is coated with a steam-proof layer which forms a steam barrier consisting of an aluminium foil which covers the entire length of the board between the polystyrene board and the external strengthening material, or on the outside of the strengthening material.

8. A wallboard according to claim 7,
**characterised in that** the aluminium foil is affixed to the wallboard by glue.

9. A wallboard according to claims 7-8,
**characterised in that** the strengthening material is a hardening epoxy mixture.

10. A wallboard according to claims 7-8,
**characterised in that** the strengthening material is a cement-based mixture.

11. A wallboard according to any of the claims 7-10,
**characterised in that** the fibre reinforcement is a fibre cloth.

12. A wallboard according to any of the claims 7-10,
**characterised in that** the fibre reinforcement is fibres included in the strengthening material.

13. A wallboard according to claims 7-12,
**characterised in that** the fibre reinforcement is glass fibre.

14. A wallboard for use on walls, floors and ceilings in damp rooms, which board is particularly suitable for tiling and plastering, which board consists of an extruded or expanded polystyrene board with a covering layer on at least one side consisting of fibre reinforcement and a layer of a strengthening material,
**characterised in that** in addition the wallboard is coated with a steam-proof layer which forms a steam barrier consisting of a primer where the primer is applied over the entire length of the board on the outside of the external strengthening material.

15. A wallboard according to claim 14,
**characterised in that** the strengthening material is a hardening epoxy mixture.

16. A wallboard according to claim 14,
**characterised in that** the strengthening material is a cement-based mixture

17. A wallboard according to any of the claims 14-16,
**characterised in that** the fibre reinforcement is a fibre cloth.

18. A wallboard according to any of the claims 14-16,
**characterised in that** the fibre reinforcement is fibres included in the strengthening material.

19. A wallboard according to claims 14-18,
**characterised in that** the fibre reinforcement is glass fibre.

20. A wallboard for use on walls, floors and ceilings in damp rooms, which board is particularly suitable for tiling and plastering, which board consists of an extruded or expanded polystyrene board with a covering layer on at least one side consisting of fibre reinforcement and a layer of a strengthening material,
**characterised in that** in addition the wallboard is coated with a steam-proof layer which forms a steam barrier consisting of a primer where the primer is applied over the entire length of the board by the external strengthening material and the primer being mixed and applied in one operation.

21. A wallboard according to claim 20,
**characterised in that** the strengthening material is a hardening epoxy mixture.

22. A wallboard according to claim 20,
**characterised in that** the strengthening material is a cement-based mixture.

23. A wallboard according to any of the claims 20-22,
**characterised in that** the fibre reinforcement is a fibre cloth.

24. A wallboard according to any of the claims 20-22,
**characterised in that** the fibre reinforcement is fibres included in the strengthening material.

25. A wallboard according to claims 20-24,
**characterised in that** the fibre reinforcement is glass fibre.
